# EUROPEAN PATENT APPLICATION

(11) **EP 4 851 127 A1**
(43) Date of publication of application: **09.12.2026**
(21) Application number: 26182882.6
(22) Date of filing: 03.06.2026
(51) Int. Cl.: C05G 5/30, C05G 3/40, C05G 3/50

(54) **FERTILIZER COATING COMPOSITION, COATED FERTILIZER, AND PREPARATION THEREOF**

(30) Priority: 06.06.2025 JP 2025094870
(71) Applicant: SHIN-ETSU CHEMICAL CO., LTD., Chiyoda-ku, Tokyo 1000005 (JP)
(72) Inventor: SAITO, Hironao, Joetsu-shi, 9428601 (JP); YAMAMOTO, Atsushi, Chiyoda-ku, 1000005 (JP); HIRAMA, Yasuyuki, Joetsu-shi, 9428601 (JP); KONISHI, Hidekazu, Joetsu-shi, 9428601 (JP)
(74) Representative: Mewburn Ellis LLP

(57) **Abstract**

A fertilizer coating composition is provided comprising (A) a hydroxyalkyl alkylcellulose having a 2 wt% aqueous solution viscosity at 20°C of 10-8,000 mPa·s, (B) tannin, (C) a hydrocarbon compound having a melting point of 50-110°C, and (D) water or a lower alcohol of 1 to 3 carbons, the weight ratio of components (A)/(B) being from 50/50 to 83.3/16.7. Using the composition, a coating layer is formed on the surface of fertilizer particles. The coating layer prevents blocking of fertilizer particles and precipitation of fertilizer nutrients, appropriately controls the initial release of nutrients, and allows for gradual release of nutrients.

## Description

### TECHNICAL FIELD

This invention relates to a fertilizer coating composition and coated fertilizer.

### BACKGROUND

Fertilizers coated on surface with coating materials such as synthetic resins are well known as coated fertilizers. Since the coated fertilizers are improved in control of fertilizer nutrient release, savings of fertilizer addition and an improvement in the efficiency of fertilizer utility are acknowledged. The cultivation technology using coated fertilizers is now widely spreading.

Prior art coated fertilizers, however, have some problems. Since many fertilizers are coated with difficultly decomposable or refractory resins, the refractory resins remaining in the coating after nutrient release are left in the environment as microplastics and finally flow into rivers and oceans. To solve the problem, Patent Document 1 discloses a coated fertilizer having a timed release function which is coated with a coating having at least one of powdered sugar polymers or derivatives thereof dispersed in a resin. The resin is typically selected from olefin polymers.

Patent Document 2 discloses a granular coated fertilizer, that is, fertilizer which is surface-coated with polybutylene succinate (or biodegradable resin) having a predetermined melt flow rate.

### Citation List

Patent Document 1: JP-A H06-087684
Patent Document 2: JP-A 2023-009027

### SUMMARY OF THE INVENTION

Since the olefin polymer constituting the coating of the coated fertilizer disclosed in Patent Document 1 is essentially non-biodegradable, the polymer is left in the environment as coating shells after the release of nutrients. In Patent Document 2, during manufacture of coated fertilizers, trichloroethylene which is a highly toxic organic solvent is used to dissolve the biodegradable resin. A fluidized bed coating machine of closed system must be used to prevent leakage.

To solve the outstanding problems, the inventors tried to use water-soluble polymers and waxes as the coating for fertilizers, finding that the release rate of nutrients is difficult to control and sometimes becomes too fast. The inventors also tried to prepare coated fertilizers using water or lower alcohols as the solvent for water-soluble polymers or waxes derived from natural polymers. Sometimes, blocking of fertilizer particles into aggregates and precipitation of ingredients in the coating solution take place.

An object of the invention is to provide a fertilizer coating composition from which a coating or coating layer can be formed on the surface of a fertilizer without using a toxic organic solvent, the coating or coating layer being capable of appropriately controlling the initial release of fertilizer nutrients and allowing for slow release of nutrients with the lapse of time, the coating layer being able to prevent blocking of fertilizer particles and precipitation of nutrients during preparation of coated fertilizer. Another object is to provide a coated fertilizer and a method of preparing the same.

The inventors have found that using a specific water-soluble cellulose ether, tannin, and a specific hydrocarbon compound in combination, a coating or coating layer can be formed on the surface of a fertilizer without using a toxic organic solvent, the coating layer offering appropriately controlled initial release of fertilizer nutrients and allowing for slow release of nutrients with the lapse of time. The coating layer is also able to prevent blocking of fertilizer particles and precipitation of nutrients during preparation of coated fertilizer.

In one aspect, the invention provides a fertilizer coating composition comprising
(A) a hydroxyalkyl alkylcellulose having a 2 wt% aqueous solution viscosity at 20°C of 10 to 8,000 mPa·s,
(B) tannin,
(C) a hydrocarbon compound having a melting point of 50 to 110°C as measured by a differential scanning calorimeter according to JIS K 0064, and
(D) at least one solvent selected from water and lower alcohols of 1 to 3 carbons,
the weight ratio of components (A)/(B) being from 50/50 to 83.3/16.7.

In a preferred embodiment, the hydroxyalkyl alkylcellulose (A) is hydroxypropyl methylcellulose or hydroxyethyl methylcellulose.

In a preferred embodiment, the tannin is at least one selected from the group consisting of hydrolyzable tannins and condensed tannins.

In a preferred embodiment, component (C) takes the form of an emulsion having particles of the hydrocarbon compound dispersed therein.

The fertilizer coating composition may further comprise (E) a compatibilizer. Preferably, the compatibilizer is at least one member selected from aliphatic carboxylic acids, polyethylene glycol derivatives having at least one structure represented by RX(C₂H₄O)ₙ-wherein R is a C₁₀-C₂₄ straight or branched monovalent hydrocarbon group, X is oxygen or ester (COO), and n is an integer of 3 to 40, in the molecule and a polyalkylene glycol-terminating OH or -OH group as a functional group, and nonionic emulsifiers.

Preferably, the compatibilizer is at least one member selected from polyethylene glycol derivatives having the general formulae (1) and (2):

RX(C₂H₄O)ₙ-H (1)

(RCOO-(C₂H₄O)ₙ₁)ₜR¹((OC₂H₄)ₙ₂-OH)ᵤ (2)

wherein R, X and n are as defined above, R¹ is a residue obtained from a polyhydric alcohol having 2 to 5 hydroxy groups by removing the hydroxy groups, i.e., C₂-C₅ di- to pentavalent straight or branched hydrocarbon group, t and u each are an integer of 1 to 4, the sum of t and u is an integer of 2 to 5, n1 and n2 each are an integer of at least 0, n1 ×t+n2×u is an integer of 3 to 30.

In a preferred embodiment, the amount of component (E) is 80 to 40% by weight based on the total weight of components (A), (B), (C) and (E).

In a preferred embodiment, the weight ratio of the total weight of components (A) and (B) to component (C), i.e., (A+B)/C is from 30/70 to 70/30.

In another aspect, the invention provides a coated fertilizer comprising a fertilizer and a coating layer covering the surface thereof, the coating layer being formed of the fertilizer coating composition defined herein.

The coated fertilizer is typically in the form of particles or pellets.

In a further aspect, the invention provides method for preparing a coated fertilizer comprising the steps of coating the fertilizer coating composition defined herein to a fertilizer and drying the coating to remove the solvent.

### ADVANTAGEOUS EFFECTS

The fertilizer coating composition of the invention is able to form a coating layer (or organic functional film) on the surface of a fertilizer without using a toxic organic solvent. The coating layer is able to appropriately control the initial release of fertilizer nutrients, to allow for slow release of nutrients with the lapse of time, and to prevent blocking of fertilizer particles and precipitation of nutrients during preparation of coated fertilizer. A coated fertilizer prepared using the fertilizer coating composition and a method of preparing the same are also provided.

### FURTHER EXPLANATIONS; OPTIONS AND PREFERENCES

### Fertilizer coating composition

In one aspect, the invention provides a fertilizer coating composition. The fertilizer coating composition is characterized by comprising (A) a hydroxyalkyl alkylcellulose having a 2 wt% aqueous solution viscosity at 20°C of 10 to 8,000 mPa·s, (B) tannin, (C) a hydrocarbon compound having a melting point of 50 to 110°C as measured by a differential scanning calorimeter according to JIS K 0064, and (D) at least one solvent selected from water and lower alcohols of 1 to 3 carbons, wherein the weight ratio of components (A)/(B) ranges from 50/50 to 83.3/16.7.

### (A) Hydroxyalkyl alkylcellulose

The hydroxyalkyl alkylcellulose as component (A) is a nonionic water-soluble cellulose ether. Typical examples include hydroxypropyl methylcellulose, hydroxyethyl methylcellulose and hydroxyethyl ethylcellulose. From the aspect of endowing a coating layer (or coating) with strength and water resistance, hydroxypropyl methylcellulose (abbreviated as HPMC, hereinafter) and hydroxyethyl methylcellulose (abbreviated as HEMC, hereinafter) are preferred.

The hydroxyalkyl alkylcellulose may be a commercially available one or prepared by a well-known method. Also, the hydroxyalkyl alkylcellulose may be used alone or in admixture.

Of the hydroxyalkyl alkylcelluloses, hydroxypropyl methylcellulose (HPMC) should preferably have a degree of substitution (DS) of methoxy group of 1.00 to 2.20, more preferably 1.30 to 2.00 and a molar substitution (MS) of hydroxypropoxy group of 0.10 to 0.60, more preferably 0.10 to 0.50.

Hydroxyethyl methylcellulose (HEMC) should preferably have a DS of methoxy group of 1.00 to 2.20, more preferably 1.30 to 1.90 and a MS of hydroxyethoxy group of 0.10 to 0.60, more preferably 0.20 to 0.40.

In connection with the hydroxyalkyl alkylcellulose, the degree of substitution (DS) of alkoxy (specifically, methoxy) group refers to the average number of alkoxy groups per anhydrous glucose unit. The molar substitution (MS) of hydroxyalkoxy (specifically, hydroxypropoxy or hydroxyethoxy) group refers to the average moles of hydroxyalkoxy groups per mole of anhydrous glucose. The DS of alkoxy group and MS of hydroxyalkoxy group of the hydroxyalkyl alkylcellulose may be computed from the values measured by the analysis of DS of hypromellose (hydroxypropyl methylcellulose, HPMC) prescribed in the Japanese Pharmacopoeia, 18th Edition.

In the practice of the invention, a hydroxyalkyl alkylcellulose having a moderate molecular weight or viscosity is used as viewed from the aspects of water resistance and cost. A 2 wt% aqueous solution of hydroxyalkyl alkylcellulose should preferably have a viscosity at 20°C of 10 to 8,000 mPa·s, more preferably 20 to 5,000 mPa·s, even more preferably 30 to 4,500 mPa·s. The viscosity at 20°C of a 2 wt% aqueous solution of hydroxyalkyl alkylcellulose can be measured, when the viscosity is equal to or more than 600 mPa·s, by a single cylinder-type rotational viscometer according to the viscosity measurement method described as the general test in the Japanese Pharmacopoeia, 18th Edition, and when the viscosity is less than 600 mPa·s, by a Ubbelohde viscometer according to the capillary tube viscosity measurement method described as the general test in the Japanese Pharmacopoeia, 18th Edition.

The amount of hydroxyalkyl alkylcellulose (A) in the fertilizer coating composition, that is, the content of component (A) relative to the total weight of components (A), (B), (C) and (D) is preferably 0.2 to 5.0% by weight, more preferably 0.3 to 2.0% by weight. The amount of hydroxyalkyl alkylcellulose (A) in the fertilizer coating composition exclusive of the solvent, that is, the content of component (A) relative to the total weight of components (A), (B) and (C) is preferably 23.0 to 40.0% by weight, more preferably 25.0 to 35.0% by weight.

In the preferred embodiment wherein the fertilizer coating composition contains component (E), the amount of hydroxyalkyl alkylcellulose (A) in the fertilizer coating composition, that is, the content of component (A) relative to the total weight of components (A), (B), (C), (D) and (E) is preferably 0.2 to 5.0% by weight, more preferably 0.3 to 2.0% by weight. The amount of hydroxyalkyl alkylcellulose (A) in the fertilizer coating composition exclusive of the solvent, that is, the content of component (A) relative to the total weight of components (A), (B), (C) and (E) is preferably 17.0 to 30.0% by weight, more preferably 18.0 to 25.0% by weight.

### (B) Tannin

Tannin as component (B) is any of polyphenols existing in the plant kingdom, that is, a group of aromatic compounds of complex structure containing numerous phenolic hydroxy groups and having a molecular weight of 600 to 2,000. Included are hydrolyzable tannins in which at least one gallic acid and sugar are ester bonded and condensed tannins derived from flavanols. Typical of the hydrolyzable tannin is tannic acid. Exemplary of the condensed tannin are persimmon tannin and theaflavin. Herein, the tannin is preferably selected from hydrolyzable tannins and condensed tannins. Tannic acid is most preferred.

In the fertilizer coating composition, the weight ratio of hydroxyalkyl alkylcellulose (A) having a 2 wt% aqueous solution viscosity at 20°C of 10 to 8,000 mPa·s to tannin (B), that is, (A)/(B), is from 50/50 to 83.3/16.7, preferably from 55/45 to 70/30. If the weight ratio exceeds the upper limit, that is, the numerator of the weight ratio (i.e., component (A)) exceeds 83.3, the resulting coating layer (coating) experiences such a rise of solubility in water that nutrient release may be accelerated, that is, timed release be degraded. If the weight ratio is below the lower limit, that is, the denominator of the weight ratio (i.e., component (B)) exceeds 50, the resulting coating layer (coating) loses strength so that nutrient release may be accelerated, that is, timed release be degraded.

The amount of tannin (B) in the fertilizer coating composition, that is, the content of component (B) relative to the total weight of components (A), (B), (C) and (D) is preferably 0.1 to 1.5% by weight, more preferably 0.2 to 1.0% by weight. The amount of tannin (B) in the fertilizer coating composition exclusive of the solvent, that is, the content of component (B) relative to the total weight of components (A), (B) and (C) is preferably 10.0 to 30.0% by weight, more preferably 12.0 to 25.0% by weight.

In the preferred embodiment wherein the fertilizer coating composition contains component (E), the amount of tannin (B) in the fertilizer coating composition, that is, the content of component (B) relative to the total weight of components (A), (B), (C), (D) and (E) is preferably 0.1 to 1.5% by weight, more preferably 0.2 to 1.0% by weight. The amount of tannin (B) in the fertilizer coating composition exclusive of the solvent, that is, the content of component (B) relative to the total weight of components (A), (B), (C) and (E) is preferably 5.0 to 20.0% by weight, more preferably 8.0 to 18.0% by weight.

### (C) Hydrocarbon compound

The hydrocarbon compound as component (C) has a melting point of 50 to 110°C, preferably 60 to 100°C, more preferably 65 to 95°C. A melting point of at least 50°C ensures that a coating layer formed of the fertilizer coating composition is so heat resistant that blocking is unlikely to occur even when the fertilizer is transported and stored at relatively high temperature. A melting point of up to 110°C ensures that the coating layer is biodegradable.

The hydrocarbon compound may be either saturated or unsaturated. Examples include polyolefinic hydrocarbon compounds, paraffinic hydrocarbon compounds, and Sasol hydrocarbon compounds.

The polyolefinic hydrocarbon compounds are polymers or copolymers based on olefinic monomers. Examples of the olefinic monomer used in the preparation of polyolefinic hydrocarbon compounds (or waxes) include C₂-C₁₂ chain olefins such as ethylene, propylene, butene, hexene, methylbutene, methylpentene, and methylhexene; and cyclic olefins such as norbornene. Of these, polymers based on chain olefins are preferred, with polymers based on ethylene, propylene or butene being more preferred. Specifically, polyethylene, polypropylene, polybutene, ethylene-propylene copolymers, propylene-butene copolymers, ethylene-propylene-butene copolymers, and ethylene-vinyl acetate copolymers are included. Of these, polyolefinic hydrocarbon compounds based on ethylene, that is, polyethylene hydrocarbon compounds are more preferred. As used herein, "based on" means that the amount of a certain component is at least 50%, more preferably at least 60%, even more preferably at least 70%, most preferably at least 80% by weight of the total weight of components of the hydrocarbon compound.

Also included in the polyolefinic hydrocarbon compounds are oxidized polyolefinic hydrocarbon compounds and modified polyolefinic hydrocarbon compounds. The oxidized polyolefinic hydrocarbon compounds are obtained by oxidizing polyolefinic hydrocarbon compounds in a well-known manner and may be used as the polyolefinic hydrocarbon compound because they are readily emulsified in aqueous solvents. The oxidized polyolefinic hydrocarbon compounds may be obtained by introducing oxygen into the molecule of polyolefinic resins having a high molecular weight while effecting thermal or chemical decomposition to adjust to the desired molecular weight. Also, modified hydrocarbon compounds such as glycol-modified polyethylene hydrocarbon compounds are useful.

The paraffinic hydrocarbon compounds are petroleum based waxes including mixtures of C₂₀-C₃₀ chain saturated hydrocarbons (normal paraffins) and mixtures (known as microcrystalline waxes) of C₃₁-C₇₀ isoparaffins (branched hydrocarbons). Examples of the C₂₀-C₃₀ chain saturated hydrocarbons (normal paraffins) include eicosane, heneicosane, docosane, tricosane, tetracosane, pentacosane, hexacosane, heptacosane, octacosane, nonacosane, and triacontane. Modified paraffin waxes are also included in the paraffinic hydrocarbon compounds.

The Sasol hydrocarbon compounds (or waxes) are synthetic waxes composed essentially of saturated straight hydrocarbons which are prepared from carbon monoxide and hydrogen by Fischer-Tropsch process.

The above-mentioned hydrocarbon compounds may be used alone or in admixture. Of these hydrocarbon compounds, hydrocarbon compounds containing at least one paraffinic hydrocarbon compound are preferred in that many hydrocarbon compounds have a melting point in the range of 50 to 110°C.

The hydrocarbon compound (C) is preferably added as an emulsion (that is, O/W emulsion in which oil droplets of hydrocarbon compound are dispersed in a solvent or aqueous phase, median diameter < 1 µm). Differently stated, it is preferred that component (C) be particles of hydrocarbon compound dispersed in emulsion. It is not critical how to prepare the hydrocarbon compound emulsion. For example, emulsification may be achieved by mixing the hydrocarbon compound with a well-known nonionic emulsifier.

Examples of the nonionic emulsifier include ester type emulsifiers such as glycerin fatty acid esters, sorbitan fatty acid esters, and sucrose fatty acid esters; ether type emulsifiers such as polyoxyethylene alkyl ethers, polyoxyethylene alkyl phenyl ethers, and polyoxyethylene polyoxypropylene glycol, which are typified by polyoxyalkylene alkyl ethers and polyoxyethylene alkyl ethers contained in commercially available AQUACER 539 (as shown in Table 2); ester-ether type emulsifiers such as fatty acid polyethylene glycol and fatty acid polyoxyethylene sorbitan; alkanolamide type emulsifiers such as fatty acid alkanolamides; alkyl polyglucosides, polyoxyethylene fatty acid amines, and oxyethylene-oxypropylene block polymers.

The nonionic emulsifier contained in the emulsion functions as (E) a compatibilizer to be described later.

The emulsion used herein is commercially available, for example, in the name of EMUSTAR-042X, EMUSTAR-1155, and EMUSTAR-0136 (Nippon Seiro Co., Ltd.), and AQUACER 539 by BYK.

It is noted that the melting point of a hydrocarbon compound is measured by an instrument according to JIS K 0064. Specifically, by using a differential scanning calorimeter Q20 (TA Instrument), heating a sample at 200°C, and cooling from that temperature to 0°C at a cooling rate of 10°C/min., then heating the sample at a ramp rate of 10°C/min., and measuring the amount of heat until 200°C is reached. Of the observed peaks of heat of fusion, the temperature corresponding to the peak of the maximum area is the maximum peak temperature of fusion. The peak temperature is the melting point.

The average particle size of a hydrocarbon compound emulsion (i.e., average size of dispersed particles) may be measured, for example, by using Microtrac particle size analyzer UPA (Nikkiso Co., Ltd.).

The weight ratio of the total weight of hydroxyalkyl alkylcellulose (A) and tannin (B) to hydrocarbon compound (C), i.e., (A+B)/C is preferably from 30.0/70.0 to 70.0/30.0, more preferably from 35.0/65.0 to 65.0/35.0, even more preferably from 40.0/60.0 to 60.0/40.0, most preferably from 45.0/55.0 to 55.0/45.0, as viewed from the aspect of control of nutrient release across the coating layer.

The amount of hydrocarbon compound (C) in the fertilizer coating composition, that is, the content of component (C) relative to the total weight of components (A), (B), (C) and (D) is preferably 0.8 to 7.0% by weight, more preferably 1.0 to 5.5% by weight. It is noted that when the hydrocarbon compound (C) is added in the form of an emulsion, the amount of the solvent (or water) of the emulsion is included in component (D). The amount of hydrocarbon compound (C) in the fertilizer coating composition exclusive of the solvent, that is, the content of component (C) relative to the total weight of components (A), (B) and (C) is preferably 35.0 to 58.0% by weight, more preferably 40.0 to 56.0% by weight.

In the embodiment wherein component (E) is contained, the amount of hydrocarbon compound (C) in the fertilizer coating composition, that is, the content of component (C) relative to the total weight of components (A), (B), (C), (D) and (E) is preferably 0.8 to 7.0% by weight, more preferably 1.0 to 5.5% by weight. It is noted that when the hydrocarbon compound (C) is added in the form of an emulsion, the amount of the solvent (or water) of the emulsion is included in component (D). The amount of hydrocarbon compound (C) in the fertilizer coating composition exclusive of the solvent, that is, the content of component (C) relative to the total weight of components (A), (B), (C) and (E) is preferably 25.0 to 55.0% by weight, more preferably 28.0 to 53.0% by weight.

### (D) Solvent

The solvent as component (D) is at least one member selected from the group consisting of water and C₁-C₃ lower alcohols. The water is, for example, purified water. Suitable C₁-C₃ lower alcohols include ethanol, methanol and isopropyl alcohol.

The solvent may be used in admixture of two or more, if necessary. A mixture of water and a C₁-C₃ lower alcohol is preferred from the aspects of effective production and easy operation during coating. When a mixture of water and a C₁-C₃ lower alcohol is used, the weight ratio of water to the C₁-C₃ lower alcohol is preferably from 10:90 to 80:20, more preferably from 15:85 to 30:70, as viewed from the ease of preparation of a coating composition. Any of commercially available solvents may be used.

The amount of solvent (D) in the fertilizer coating composition is preferably 200 to 2,600 parts, more preferably 300 to 2,400 parts by weight per 100 parts by weight of the total weight of solids exclusive of the solvent, as viewed from the aspect of effective operation during coating. It is noted that when the hydrocarbon compound (C) is added in the form of an emulsion, the amount of the solvent (or water) of the emulsion is included in component (D).

### (E) Compatibilizer

The fertilizer coating composition may optionally comprise a compatibilizer. The compatibilizer is effective for enhancing the integrity or uniformity of a coating layer formed from the fertilizer coating composition primarily comprising (A) hydroxyalkyl alkylcellulose, (B) tannin, and (C) hydrocarbon compound.

The compatibilizer is preferably at least one member selected from (i) aliphatic carboxylic acids, (ii) polyethylene glycol derivatives having at least one structure represented by RX(C₂H₄O)ₙ- wherein R is a C₁₀-C₂₄ straight or branched monovalent hydrocarbon group, X is oxygen or ester (COO), and n is an integer of 3 to 40, in the molecule and a polyalkylene glycol-terminating OH or -OH group as a functional group, and (iii) nonionic emulsifiers.

### (i) aliphatic carboxylic acid

Examples of the aliphatic carboxylic acid used herein include aliphatic monocarboxylic acids such as palmitic acid, stearic acid, behenic acid, and decanoic acid, and aliphatic dicarboxylic acids such as adipic acid, sebacic acid, azelaic acid, dodecanedioic acid, and 1,18-octadecanedicarboxylic acid. Of these, stearic acid is preferred from the aspects of cost and uniformity of the fertilizer coating composition.

### (ii) polyethylene glycol derivative

The polyethylene glycol derivative used herein is a polyethylene glycol (PEG) derivative having at least one structure represented by RX(C₂H₄O)ₙ- in the molecule and a polyethylene glycol-terminating OH or -OH group as a functional end group. Herein R is a C₁₀-C₂₄ straight or branched monovalent hydrocarbon group, X is oxygen or ester (COO), and n is an integer of 3 to 40. The PEG derivatives may be used alone or in admixture.

The number of structures represented by RX(C₂H₄O)ₙ- in the molecule is at least 1, preferably 1 to 4, more preferably 1.

Herein R is a C₁₀-C₂₄, preferably C₁₆-C₂₂ straight or branched monovalent hydrocarbon group, as viewed from the integrity or uniformity of a coating layer. Examples of the monovalent hydrocarbon group R include straight alkyl groups such as lauryl, cetyl, stearyl, behenyl, undecyl, pentadecyl, heptadecyl, and henicosyl; branched alkyl groups such as isostearyl, octyldodecyl, decyltetradecyl, isoheptadecyl, 16-methylhexadecyl, 2-octylundecyl, and 2-decyltridecyl; and straight alkenyl groups such as oleyl. R is preferably heptadecyl or isoheptadecyl from the aspect of availability of a compound.

The PEG derivative is an ether type polyethylene glycol (PEG) derivative when X is oxygen, and an ester type polyethylene glycol (PEG) derivative when X is ester (COO). The PEG derivative may be used independent of whether X is oxygen or ester.

Herein, n indicative of the average added molar number of ethyleneoxy group (-C₂H₄O-) is an integer of 3 to 40, preferably 5 to 30, as viewed from the aspect of obtaining a uniform coating layer from the fertilizer coating composition.

Preferably the PEG derivative is either one or both of a compound having the general formula (1) and a compound having the general formula (2), which are also referred to as Compounds 1 and 2.

RX-(C₂H₄O)ₙ-H (1)

(RCOO-(C₂H₄O)ₙ₁)tR¹((OC₂H₄)ₙ₂-OH)ᵤ (2)

Herein R, X and n are as defined above, R¹ is a residue obtained from a polyhydric alcohol having 2 to 5 hydroxy groups by removing the hydroxy groups, i.e., C₂-C₅ di- to pentavalent straight or branched hydrocarbon group, t and u each are an integer of 1 to 4, the sum of t and u is an integer of 2 to 5, n1 and n2 each are an integer of at least 0, n1×t+n2×u is an integer of 3 to 30.

### [Compound 1]

In formula (1), R is as defined above, that is, each independently a C₁₀-C₂₄, preferably C₁₆-C₂₂ straight or branched monovalent hydrocarbon group from the aspect of solubility of PEG derivative in water. Examples of the monovalent hydrocarbon group R are as exemplified above. In formula (1), n is as defined above.

Examples of Compound 1 include monostearic acid polyethylene glycols (the average added molar number of ethyleneoxy groups (-C₂H₄O-) is 5, 10, 20 or 30), monoisostearic acid polyethylene glycols (the average added molar number of ethyleneoxy groups (-C₂H₄O-) is 6, 8, 10, 12 or 16), and monooleic acid polyethylene glycols (the average added molar number of ethyleneoxy groups (-C₂H₄O-) is 6 or 10).

When Compound 1 is used in powder form, the powder preferably has an average particle size (as measured by the dry laser method) of 10 to 280 µm, more preferably 10 to 200 µm, even more preferably 10 to 150 µm, from the aspect of preventing poor dissolution in the solvent. Notably, the average particle size or median diameter D50 can be measured by the dry laser diffraction method by using Mastersizer 3000 (Malvern Panalytical Ltd.) or HELOS (Sympatec GmbH), injecting a powder sample under compressed air, illuminating a laser beam, and computing a volume base average particle size from a diffraction intensity.

### [Compound 2]

In formula (2), R is as defined above, that is, each independently a C₁₀-C₂₄, preferably C₁₆-C₂₂ straight or branched monovalent hydrocarbon group from the aspect of forming a uniform coating layer from the fertilizer coating composition. Examples of the monovalent hydrocarbon group R are as exemplified above.

In formula (2), R¹ is a residue obtained from a polyhydric alcohol having 2 to 5, preferably 2 or 3 hydroxy groups by removing the hydroxy groups, preferably C₂-C₅ di-to pentavalent, more preferably di- or trivalent straight or branched hydrocarbon group. If the carbon count is less than 2, i.e., the carbon count is 1, the compound is difficult to prepare. If the carbon count exceeds 5, the compound is so hydrophobic that it may be difficultly dissolved in the solvent or water.

Examples of the polyhydric alcohol include dihydric alcohols (having 2 hydroxy groups) such as 1,2-butanediol and 1,3-butylene glycol; trihydric alcohols (having 3 hydroxy groups) such as glycerin and trimethylolpropane; and tetrahydric alcohols (having 4 hydroxy groups) such as diglycerin, erythritol, pentaerythritol, sorbitan and methyl glucoside; and pentahydric alcohols (having 5 hydroxy groups) such as xylitol and triglycerin. Of these, di- and trihydric alcohols are preferred from the aspect of solubility in the solvent or water, with 1,2-butanediol and 1,3-butylene glycol being more preferred.

In formula (2), t and u each are an integer of 1 to 4. From the aspect of forming a uniform coating layer from the fertilizer coating composition, t is preferably 1 and u is preferably 1 or 2. The sum of t and u (t+u) is an integer of 2 to 5, corresponding to the number of hydroxy groups on the polyhydric alcohol from which R¹ is derived, preferably 2 or 3, more preferably 2 from the aspect of forming a uniform coating layer from the fertilizer coating composition.

In formula (2), n1 and n2 each representing the average added molar number of ethyleneoxy groups (-C₂H₄O-) are independently an integer of at least 0. The sum of n1×t+n2×u is an integer of 3 to 30, preferably 5 to 30, more preferably 8 to 20, even more preferably 10 to 20.

Examples of Compound 2 include isostearic acid PEG-10BG (the sum (n1+n2) of the average added molar numbers of ethyleneoxy groups (-C₂H₄O-) is 10), isostearic acid PEG-15BG (the sum (n1+n2) of the average added molar numbers of ethyleneoxy groups (-C₂H₄O-) is 15), isostearic acid PEG-20BG (the sum (n1+n2) of the average added molar numbers of ethyleneoxy groups (-C₂H₄O-) is 20), and isostearic acid PEG-25BG (the sum (n1+n2) of the average added molar numbers of ethyleneoxy groups (-C₂H₄O-) is 25).

Compound 2 is a liquid or difficult-to-grind waxy solid at normal temperature (20°C±15°C). Since Compound 2 cannot be ground in a substantial sense, its use in powder form is difficult.

Notably, the PEG derivative can be used independent of whether it is solid or liquid.

### (iii) nonionic emulsifier

Examples of the nonionic emulsifier used herein are the same as exemplified above as the nonionic emulsifier used when the hydrocarbon compound (C) is added in emulsion form. Inter alia, polyoxyethylene alkyl ethers and fatty acid polyethylene glycols are preferred from the aspect of forming a uniform coating layer from the fertilizer coating composition. It is noted that the nonionic emulsifier used when the hydrocarbon compound (C) is added in emulsion form is also encompassed in the compatibilizer.

The amount of compatibilizer (E) in the fertilizer coating composition, that is, the content of component (E) relative to the total weight of components (A), (B), (C), (D) and (E) is preferably 0.5 to 5.0% by weight, more preferably 0.9 to 2.0% by weight, from the aspect of integrity or uniformity of a coating layer formed from the fertilizer coating composition.

The amount of compatibilizer (E) in the fertilizer coating composition exclusive of the solvent, that is, the content of component (E) relative to the total weight of components (A), (B), (C) and (E) is preferably 8.0 to 40.0% by weight, more preferably 10.0 to 35.0% by weight.

### Other additives

The fertilizer coating composition may further comprise another additive, if necessary, as long as the benefits of the invention are not compromised. Other additives include plasticizers, lubricants, gloss agents, surfactants, colorants, pigments, coating agents, and defoamers.

Suitable plasticizers include glycerin, polyethylene glycol, propylene glycol and triethyl citrate.

Suitable lubricants include talc, magnesium stearate, calcium stearate, and colloidal silica.

Suitable gloss agents include carnauba wax, shellac, bees wax and hydrogenated oil.

Suitable surfactants include Polysorbate 80, Polysorbate 60, Macrogol 400, sodium laurylsulfate, Polyoxyl 40 Stearate, and polyoxyethylene hydrogenated castor oil 60.

Suitable colorants include yellow iron oxide, ferric oxide (red), orange essence, brown iron oxide, caramel, light anhydrous silicic acid, food blue #5 (Brilliant Blue FCF), food yellow #4, food yellow #4 aluminum lake, food yellow #5, food red #2, food red #3, food red #102, food blue #2, talc, sodium fluorescein, powdered green tea, vitamin C, edible lake pigment, carotenoid pigment, flavonoid pigment, quinone pigment, carbon black, and black iron oxide.

Suitable coating agents include gum Arabic, ethyl cellulose, hydroxypropyl cellulose, carboxyvinyl polymers, and carboxymethyl ethylcellulose.

Suitable defoamers include dimethyl polysiloxane and silicon dioxide mixtures.

In preparing the fertilizer coating composition, if the hydroxyalkyl alkylcellulose powder is directly admitted into water, sometimes it takes a certain time until the powder is dissolved because powder particles are wetted with water only on their surface and partially dissolved aggregates or clumps form. It is then recommended to dissolve the hydroxyalkyl alkylcellulose powder by previously dispersing the powder in a C₁-C₃ lower alcohol and adding water to the dispersion, with stirring. This method is applicable when water and an organic solvent (which is uniformly miscible with water, such as C₁-C₃ lower alcohols) are used as a solvent mixture.

The fertilizer coating composition is prepared by dissolving one of the foregoing components which is dissolvable in the C₁-C₃ lower alcohol all at once or in an arbitrary order, dispersing the hydroxyalkyl alkylcellulose, and adding water with stirring to dissolve the cellulose. It is noted that the readily dissolvable component, typically tannin may be mixed with the hydroxyalkyl alkylcellulose and dissolved. By finally adding the hydrocarbon compound in emulsion form and mixing, the fertilizer coating composition is obtained. For example, at least a portion, preferably the entirety of the C₁-C₃ lower alcohol (D) is mixed with optional plasticizer on an agitating machine under stirring conditions: room temperature (20°C±15°C), 100-500 rpm, and 30 seconds to 5 minutes. Thereafter, at least a portion, preferably the entirety of the compatibilizer (E) is added and mixed on the agitating machine under stirring conditions: room temperature (20°C±15°C), 100-500 rpm, and 30 seconds to 5 minutes. Subsequently, component (A) and tannin (B) are added to the mixture and mixed on the agitating machine under stirring conditions: room temperature (20°C±15°C), 100-500 rpm, and 30 seconds to 5 minutes to achieve dispersion and dissolution. Thereafter, water (D) and all remaining components, excluding water in the hydrocarbon emulsion (C), are added in divided portions using a pipette, continuously over a predetermined time of 1 to 10 minutes and mixed on the agitating machine under stirring conditions: room temperature (20°C±15°C), 100-500 rpm, and 30 seconds to 5 minutes to dissolve component (A). Finally, component (C) in emulsion form is continuously added in divided portions over a predetermined time of 1 to 10 minutes and mixed on the agitating machine under stirring conditions: room temperature (20°C±15°C), 100-500 rpm, and 30 seconds to 5 minutes to complete the fertilizer coating composition.

From the fertilizer coating composition, a coating layer or coating can be formed without using any toxic organic solvent, which prevents or retards blocking of fertilizer particles or precipitation of fertilizer nutrients during preparation of coated fertilizer, enables appropriate control of initial release of fertilizer nutrients on the fertilizer surface, and allows for gradual release of fertilizer nutrients with the lapse of time.

### Coated fertilizer

A further embodiment of the invention is a coated fertilizer comprising a fertilizer and a coating layer covering the surface thereof, the coating layer being formed of the inventive fertilizer coating composition.

The fertilizer used herein may be any of well-known granular chemical fertilizers. Included are nitrogen fertilizers, phosphoric acid fertilizers, potassium fertilizers, calcium salts, magnesium salts, iron salts, and mixtures of two or more thereof.

The nitrogen fertilizers are fertilizers primarily containing nitrogenous compounds. Non-limiting examples include urea, aldehyde condensed ureas such as formaldehyde condensed urea and isobutylaldehyde condensed urea, guanylurea sulfate, calcium cyanamide (also known as lime nitrogen), ammonium nitrate, ammonium sulfate, and ammonium chloride.

Non-limiting examples of the phosphoric acid fertilizer include ammonium dihydrogen phosphate, superphosphate of lime, triple superphosphate of lime, fused magnesium phosphate, and calcined magnesium phosphate.

The potassium fertilizer is a fertilizer primarily comprising potassium, and non-limiting examples thereof include potassium nitrate, potassium chloride, potassium sulfate and potassium silicate.

Suitable calcium salts include calcium phosphate, calcium sulfate, calcium nitrate, and calcium chloride. Suitable magnesium salts include magnesium nitrate, magnesium chloride, magnesium sulfate and magnesium phosphate. Suitable iron salts include ferrous nitrate, ferric nitrate, ferrous phosphate, ferric phosphate, ferrous sulfate, ferric sulfate, ferrous hydrochloride, and ferric hydrochloride.

In one embodiment of the invention, the fertilizer preferably takes the form of particles or pellets, more preferably particles. The particulate fertilizer has a weight average particle size of preferably 1 to 20 mm, more preferably 2 to 10 mm.

The fertilizer may have a protective layer (exclusive of the coating layer of the inventive fertilizer coating composition) containing a wax on the surface. The wax is at least one of paraffin wax, rice wax and ester wax.

The protective layer preferably has a thickness of 3 to 100 µm, more preferably 5 to 70 µm from the aspects of control of release of fertilizer nutrients, productivity and cost.

The thickness of the protective layer may be measured as follows. One coated fertilizer particle is cut across the center of gravity into two halves with a razor, a photo of the cross-section is taken under scanning electron microscope (SEM), and the thickness (µm) of the protective layer is measured at an arbitrary point. The thickness (µm) of the protective layer is obtained by randomly selecting 5 coated fertilizer particles, cutting and measuring as above, and calculating the average of 5 measured values.

The protective layer may be formed by dissolving or dispersing protective layer-forming components in an organic solvent, spraying the solution or dispersion onto fertilizer particles, and drying. A coating layer of the fertilizer coating composition is then formed on the protective layer, yielding the coated fertilizer.

The coating layer on the coated fertilizer is a coating which covers the surface, preferably the entire surface of the fertilizer and contains the components of the fertilizer coating composition exclusive of the solvent, that is, a dry film of the fertilizer coating composition. The coating layer restrains the initial release of fertilizer nutrients to an appropriate level and allows for gradual release of fertilizer nutrients with the lapse of time.

The coating amount or build-up of the coating layer is preferably 0.1 to 25% by weight, more preferably 0.3 to 20% by weight. Notably the coating amount is a weight proportion (wt%) of the total weight of components of the fertilizer coating composition exclusive of the solvent (that is, the total weight of hydroxyalkyl alkylcellulose (A), tannin (B), hydrocarbon compound (C) and optionally compatibilizer (E) and other additives) relative to the weight of the fertilizer.

In one embodiment, the coating layer preferably has a thickness of 10 to 150 µm, more preferably 10 to 130 µm from the aspects of control of release of fertilizer nutrients, productivity and cost.

The method of measuring the thickness of the coating layer is the same as the method of measuring the thickness of the protective layer. One coated fertilizer particle is cut across the center of gravity into two halves, a photo of the cross-section is taken under SEM, and the thickness (µm) of the coating layer is measured at an arbitrary point. The thickness (µm) of the coating layer is obtained by randomly selecting 5 coated fertilizer particles, cutting and measuring as above, and calculating the average of 5 measured values.

### Method of preparing coated fertilizer

A further embodiment of the invention is a method for preparing a coated fertilizer comprising the steps of coating the inventive fertilizer coating composition to a fertilizer and drying the coating to remove the solvent.

The coating step uses any of well-known coating machines, for example, pan coating machine (also known as tablet film coating machine), drum coating machine, fluidized bed coating machine, and stirred fluidized bed coating machine. Of these, the pan coating machine and drum coating machine are preferred from the aspect of uniformity of a coating layer on the fertilizer surface and ease of operation. The pan coating machine is more preferred. A spray unit is attached to the coating machine, examples of which include an air spray, airless spray and three-fluid spray.

With respect to the coating conditions of the fertilizer coating composition, the coating time is adjusted such that the amount of the fertilizer coating composition exclusive of the solvent is 0.1 to 25.0 parts, more preferably 0.3 to 20.0 parts by weight per 100 parts by weight of the fertilizer, when retention of uniformity of the coating layer and prevention of blocking are taken into account.

On use of the pan coating machine, the spraying rate is preferably 4 to 50 g/min, more preferably 6 to 40 g/min from the aspects of retention of uniformity of the coating layer and prevention of blocking. The rotation of the pan is preferably 8 to 24 rpm, more preferably 10 to 18 rpm from the aspects of retention of uniformity of the coating layer and prevention of blocking.

The coating step is preferably performed while keeping the powder at a temperature of 25 to 50°C, more preferably 30 to 40°C.

After the fertilizer coating composition is coated on the fertilizer, the coating is dried to remove the solvent. A coating layer is formed on the fertilizer surface, which layer contains the components of the fertilizer coating composition from which the solvent has been removed.

The drying step may be carried out by tumbling the fertilizer sprayed with the coating composition within the pan coating machine at the end of the coating step while stopping further spraying of the fertilizer coating composition, or by using a dryer. Even air drying is acceptable. Alternatively, the coating step may include tumbling within the pan coating machine and further drying on a dryer.

In the step of tumble drying within the pan coating machine, the feed air or drying temperature is preferably 45 to 75°C, more preferably 50 to 70°C, and the drying time is preferably 10 minutes to 3 hours, more preferably 20 minutes to 2 hours.

On use of a dryer, the feed air or drying temperature is preferably 45 to 75°C, more preferably 50 to 70°C, and the drying time is preferably 1 to 20 hours, more preferably 2 to 17 hours from the aspect of improving productivity of the coated fertilizer.

The powder temperature during the drying step is preferably set equal to or below the melting point of the hydrocarbon compound (C), more preferably below the melting point for preventing fertilizer particles from blocking together due to fusion of the hydrocarbon compound (C). In general, the powder temperature during the drying step is lower than the feed air or drying temperature. When the hydrocarbon compound (C) having a relatively low melting point is used, it is recommended that the powder temperature during the drying step is measured and the feed air or drying temperature is adjusted to be equal to or below the melting point.

Through the foregoing steps, the coated fertilizer is obtained.

### EXAMPLES

Examples are given below by way of illustration, but not by way of limitation.

The melting point of a hydrocarbon compound is measured by a differential scanning calorimeter according to JIS K 0064.

### [Starting components]

### (1) Hydroxyalkyl alkylcellulose (CE)

Table 1 tabulates the specifications of CEs used herein.

**Table 1**

| Symbol | Physical properties | Manufacturer |
|---|---|---|
| HPMC-1 | Type: HPMC, 2 wt% aqueous solution viscosity: 47 mPa·s, DS of methoxy: 1.84, MS of hydroxypropoxy: 0.22 | |
| HPMC-2 | Type: HPMC, 2 wt% aqueous solution viscosity: 47 mPa·s, DS of methoxy: 1.76, MS of hydroxypropoxy: 0.16 | |
| HPMC-3 | Type: HPMC, 2 wt% aqueous solution viscosity: 97.9 mPa·s, DS of methoxy: 1.44, MS of hydroxypropoxy: 0.17 | Shin-Etsu Chemical Co., Ltd. |
| HPMC-4 | Type: HPMC, 2 wt% aqueous solution viscosity: 4370 mPa·s, DS of methoxy: 1.86, MS of hydroxypropoxy: 0.25 | |
| HPMC-5 | Type: HPMC, 2 wt% aqueous solution viscosity: 5.95 mPa·s, DS of methoxy: 1.89, MS of hydroxypropoxy: 0.23 | |

### (2) tannin (TA)

- tannic acid (Fuji Wako Pure Chemical Corp.)

### (3) hydrocarbon compound emulsion

Table 2 tabulates the specifications of hydrocarbon compound emulsions used herein.

**Table 2**

| Product name | | | AQUACER 539 | EMUSTAR -042X | EMUSTAR -1155 | CHEMIPEARL W4005 |
|---|---|---|---|---|---|---|
| Manufacturer | | | BYK | Nippon Seiro | Nippon Seiro | Mitsui Chemical |
| Hydrocarbon compound | | | modified paraffin wax | microcrystalline wax | paraffin wax | polyolefin |
| Solid composition content (wt%) | Hydrocarbon wax | | 65.2 | 87.5 | 87.5 | 100 |
| | Emulsifier | polyoxyalkylene alkyl ether 1 | 13.0 | - | - | - |
| | | polyoxyalkylene alkyl ether 2 | 11.1 | - | - | - |
| | | polyoxyethylene alkyl ether | 10.7 | - | - | - |
| | | other nonionic emulsifier | - | 12.5 | 12.5 | - |
| Solid concentration (wt%) | | | 35 | 40 | 40 | 40 |
| Solvent | | | water | water | water | water |
| mp (°C) | | | 90 | 84 | 69 | 130 |

### (4) solvent

- water (purified water)
- ethanol (anhydrous ethanol, Kanto Chemical Co.)

### (5) compatibilizer

• stearic acid
• polyethylene glycol derivative
(product name: EMALEX 810, Nihon Emulsion Co., Ltd.)

| | |
|---|---|
| INCI name: | PEG-10 stearate |
| characteristic structure: | polyethylene glycol derivative |
| compound name: | polyethylene glycol monostearate (average added molar number of ethyleneoxy groups 10) |
| chemical formula: | C₁₇H₃₅COO(C₂H₄O)₁₀H |
| carbon count in substituent R: | 17 (heptadecyl) |
| average added molar number of ethyleneoxy groups n: | 10 |
| IOB value: | 1.10 |
| weight average molecular weight (Mw): | 730 |
| mp.: | 41°C |
| solubility: | emulsified dispersion |
| form: | waxy solid |

### (6) plasticizer

- glycerin (Fuji Wako Pure Chemical Corp.)

### (7) fertilizer

Table 3 tabulates the specifications of fertilizers used herein.

**Table 3**

| Symbol | A | | B | |
|---|---|---|---|---|
| Type of fertilizer | chemical fertilizer 8-8-8 | | high-grade chemical fertilizer 14-14-14 | |
| Guaranteed nutrient amount (wt%) | ammonia nitrogen | 8.0 | ammonia nitrogen | 14.0 |
| | soluble phosphate | 8.0 | soluble phosphate | 14.0 |
| | water-soluble potassium | 8.0 | water-soluble potassium | 14.0 |
| Form | particles | | particles | |
| Particle size (mm) | 2-5 | | 2-5 | |
| Import/sales company | Central Green Co., Ltd. | | | |

### Example 1

### [Preparation of fertilizer coating composition]

A fertilizer coating composition was prepared according to the formulation shown in Table 4.

A 2000-mL beaker was charged with 463.5 g of ethanol and 1.2 g of glycerin, which were stirred by a stirrer MDC-NS (Tokyo Rikakikai Co., Ltd.) at 25°C and 300 rpm for 1 minute. Then 3.3 g of stearic acid (Fuji Wako Pure Chemical Corp.) was added as another compatibilizer to the solution, which was stirred at 25°C and 300 rpm for 5 minutes for dissolution. Subsequently, 6.2 g of HPMC-1 shown in Table 1 and 3.6 g of tannic acid (Fuji Wako Pure Chemical Corp.) were added to the solution, which was stirred at 25°C and 300 rpm for 3 minutes for dispersion and dissolution. Using a pipette, 104.2 g of water was continuously added so that addition was finished within 3 minutes, followed by stirring at 25°C and 300 rpm for 2 minutes to dissolve HPMC-1. Thereafter, 37.8 g of hydrocarbon compound emulsion (AQUACER 539 by BYK, modified paraffin wax (mp. 90°C), solvent: water, non-volatiles 35 wt%) was continuously added so that addition was finished within 2 minutes, followed by stirring at 25°C and 300 rpm for 1 minute. In this way, the fertilizer coating composition was obtained.

Table 5 shows the contents of components in the fertilizer coating compositions of Examples and Comparative Examples. In the column of content of each component, the left sub-column represents the content inclusive of the solvent and the right sub-column represents the content exclusive of the solvent.

### [Preparation of coated fertilizer]

With the fertilizer coating composition, 160 g of the fertilizer shown in Table 3 as a core was coated under the following conditions until the sprayed amount reached 540 g.

### <Coating conditions>

| | |
|---|---|
| • machine: | automatic film coating machine FM-2-S-480 (Freund Inc.) |
| • amount of fertilizer charged: | 160 g |
| • air feed rate: | 0.5 m²/min |
| • pan rotation: | 18 rpm |
| • spray rate: | 6 g/min |
| • spray pneumatic pressure: | 0.15 MPa |
| • feed air temperature: | 55°C |
| • discharge air temperature: | 37-39°C |
| • powder temperature: | 36-40°C |
| • nozzle diameter: | 0.7 mm |

Spraying of the fertilizer coating composition was stopped, after which the fertilizer was tumbled in the same machine at temperature 55°C for 30 minutes so that the solvent was evaporated off to dryness. The fertilizer was taken out of the machine, moved to a constant temperature and drying oven (model DKN 812, Yamato Scientific Co., Ltd.) conditioned at 70°C, and rested therein for 16 hours, obtaining the coated fertilizer. The amount of solids coated which was obtained by excluding the solvent from the fertilizer coating composition was 15% by weight based on the fertilizer.

### Example 2

A fertilizer coating composition of the formulation shown in Table 4 was prepared by the same procedure as in Example 1 except that the other compatibilizer (stearic acid) was omitted. Then a coated fertilizer was prepared as in Example 1.

### Examples 3 and 4

A fertilizer coating composition of the formulation shown in Table 4 was prepared by the same procedure as in Example 1 except that component (A) was changed to HPMC-2 or HPMC-3 (see Table 1). Then a coated fertilizer was prepared as in Example 1.

### Example 5

A fertilizer coating composition of the formulation shown in Table 4 was prepared by the same procedure as in Example 1 except that component (A) was changed to HPMC-4 (see Table 1). Then a coated fertilizer was prepared as in Example 1 except that the sprayed amount was changed to 730 g.

### Example 6

A fertilizer coating composition of the formulation shown in Table 4 was prepared by the same procedure as in Example 1 except that component (C) was changed to EMUSTAR-042X (Table 2) and the other compatibilizer was changed to EMALEX 810. Then a coated fertilizer was prepared as in Example 1.

### Example 7

Using the fertilizer coating composition of Example 1, a coated fertilizer was prepared as in Example 1 except that the fertilizer was changed to B (high-grade chemical fertilizer 14-14-14).

### Example 8

A fertilizer coating composition of the formulation shown in Table 4 was prepared by the same procedure as in Example 1 except that component (C) was changed to EMUSTAR-1155 (Table 2). Then a coated fertilizer was prepared as in Example 1.

### Example 9

A fertilizer coating composition of the formulation shown in Table 4 was prepared by the same procedure as in Example 1 except that the weight ratio of component (A)/(B) was changed. Then a coated fertilizer was prepared as in Example 1 except that the sprayed amount was changed to 461 g.

### Comparative Example 1

A fertilizer coating composition of the formulation shown in Table 4 was prepared by the same procedure as in Example 1 except that component (C) was changed to CHEMIPEARL W4005 (Table 2) and the other compatibilizer (stearic acid) was omitted. Then a coated fertilizer was prepared as in Example 1.

### Comparative Example 2

A fertilizer coating composition of the formulation shown in Table 4 was prepared by the same procedure as in Example 1 except that component (A) was changed to HPMC-5 (Table 1). Then a coated fertilizer was prepared as in Example 1 except that the sprayed amount was changed to 265 g.

### Comparative Example 3

A fertilizer coating composition of the formulation shown in Table 4 was prepared by the same procedure as in Example 1 except that the weight ratio of component (A)/(B) was changed. Then a coated fertilizer was prepared as in Example 1 except that the sprayed amount was changed to 783 g.

It is noted that in Examples 1 to 9 and Comparative Examples 1 to 3, neither blocking of fertilizer particles nor precipitation of nutrients was observed during preparation of the coated fertilizer.

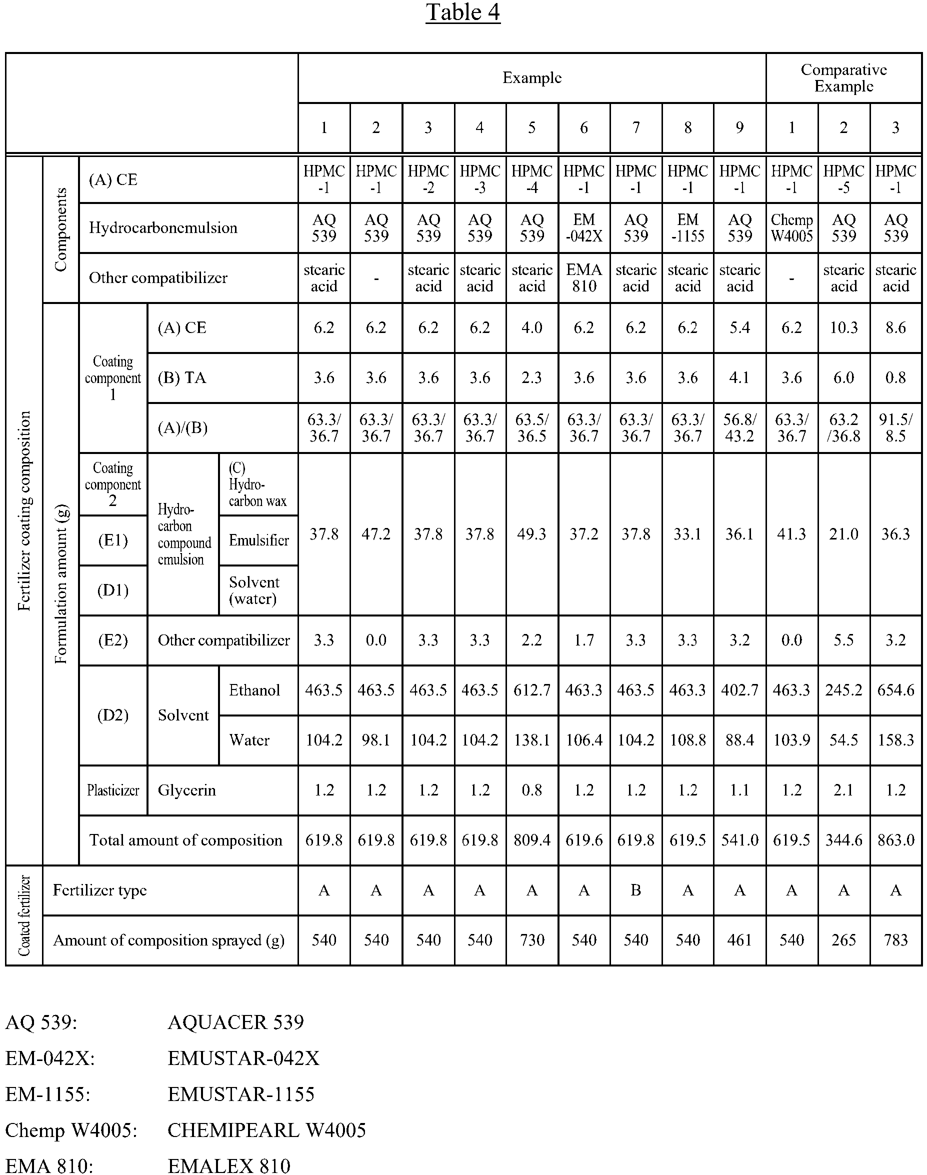

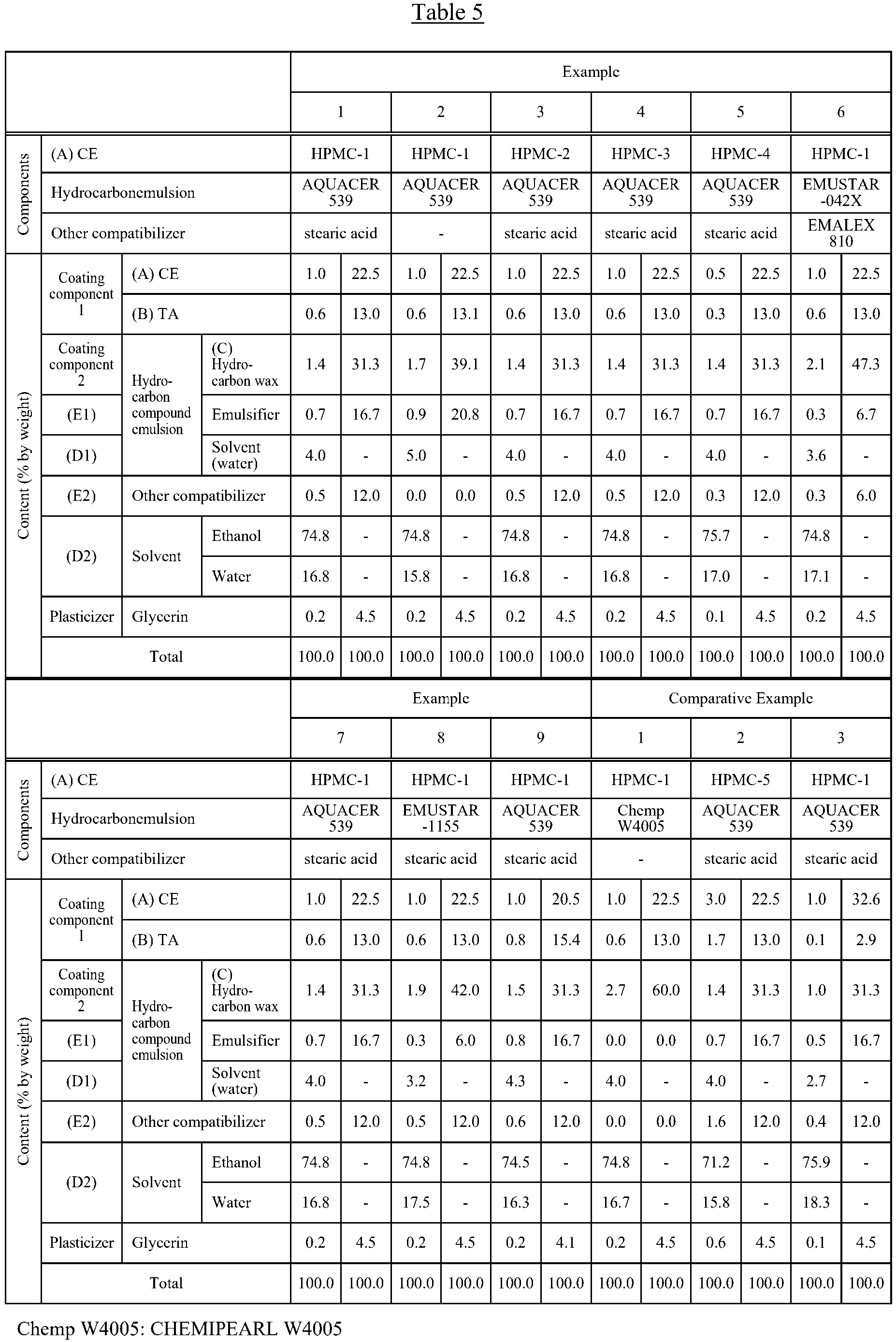

The fertilizer coating compositions and the coated fertilizers prepared above were examined by the following tests.

### Yield

The weight of the coated fertilizer was measured. The yield of the coated fertilizer was computed according to the following formula. $\begin{matrix}Yield of coated fertilizer \left(%\right) = \\ \left(weight of coated fertilizer\right) / \left[\begin{matrix}\left(weight of fertilizer charged prior to coating\right) \\ + \left(weight of solids of coating composition exclusive of solvent\right)\end{matrix}\right] \times 100\end{matrix}$

### Evaluation of initial release rate

The initial release rate of the coated fertilizer was computed by carrying out the coated fertilizer release test according to the procedure described in Testing Method for Fertilizers 2024 6.8 (6.8.a Standing in water).

The sample solution obtained from the release test was measured for concentration of ammoniacal nitrogen by the Nessler method (measuring item ammoniacal nitrogen), using multiparameter photometer HI83325 (Hanna Instruments), a cylindrical glass cell of diameter 24 mm and cell length 60 mm, and a 420-nm filter.

The initial release rate was computed according to the following formula. Judgment was made with an initial release rate of 50% being set as the threshold. $\begin{matrix}Initial release rate of ammoniacal nitrogen \left(%\right) = \\ \left(\begin{matrix}weight fraction of ammoniacal nitrogen in sample solution stored \\ in a thermostat chamber at 30 ° C for 24 hours\end{matrix}\right) / \left(\begin{matrix}weight fraction of \\ ammoniacal nitrogen in the sample solution from which the entirety of \\ ammoniacal nitrogen in the coated fertilizer is released\end{matrix}\right) \times 100\end{matrix}$

### Biodegradability (degree of disintegration) of fertilizer coating composition

A glass plate of 15 cm by 15 cm by 0.5 cm was rested on a hot plate kept at 60°C. Masking tape strips of 80 µm thick were attached to both ends of the upper surface of the glass plate. While blowing hot air at 60°C in a direction parallel to the glass plate and at 10 cm above the glass plate, 5 g of the remaining fertilizer coating composition (after spraying for preparation of the coated fertilizer was finished) was cast between the masking tape strips at opposite ends of the glass plate and leveled with a glass bar. This was allowed to stand for 10 minutes for the purpose of allowing the solvents, ethanol and water to volatilize off. There was obtained a dry film of the coating composition from which the solvents had been removed.

The dry film of the fertilizer coating composition was sheared into pieces of 15 mm by 15 mm by film thickness, which was tested under simulated composting conditions according to JIS K6954.

The test pieces obtained by shearing the dry film of the fertilizer coating composition and 1 kg of wet synthetic solid waste were mixed and placed in a composting reactor. The reactor was closed with a lid, placed in an air circulating oven and kept at 58°C for 90 days. High-temperature culture was carried out according to the composting procedure.

Subsequently, 25 g of fertile soil (soil having high microbial activity) was added to the reactor and agitated. The reactor was closed with the lid, placed in an air circulating oven and kept at 25°C for 90 days. With the lid removed, the contents of the reactor were dried. The dry contents were passed through a sieve of predetermined size. The residual test pieces on the sieve were collected, and the dry mass (mr) thereof as non-disintegrated test pieces was measured. A degree of disintegration (%) was computed according to the following formula. $\begin{matrix}Degree of disintegration \left(%\right) = \\ \left[\left(initial dry mass mi \left(g\right) of test pieces\right)-\left(\begin{matrix}dry mass mr \left(g\right) of \\ residual test pieces on sieve\end{matrix}\right)\right] / \left(initial dry mass mi \left(g\right) of test pieces\right) \times 100\end{matrix}$

The degree of disintegration at 25°C after 90 days was evaluated according to the following criterion.

### <Evaluation criterion>

| | |
|---|---|
| ⊚: | ≥ 80% |
| ○: | 60% to less than 80% |
| Δ: | 10% to less than 60% |
| ×: | less than 10% |

The results are shown in Table 6.

**Table 6**

| | | Example | | | | | |
|---|---|---|---|---|---|---|---|
| | | 1 | 2 | 3 | 4 | 5 | 6 |
| Type | (A) CE | HPMC-1 | HPMC-1 | HPMC-2 | HPMC-3 | HPMC-4 | HPMC-1 |
| | Hydrocarbon emulsion | AQUACER 539 | AQUACER 539 | AQUACER 539 | AQUACER 539 | AQUACER 539 | EMUSTAR -042X |
| | Other compatibilizer | stearic acid | - | stearic acid | stearic acid | stearic acid | EMALEX 810 |
| Weight ratio | (A)/(B) | 63.3/36.7 | 63.3/36.7 | 63.3/36.7 | 63.3/36.7 | 63.5/36.5 | 63.3/36.7 |
| | (A+B):(C) | 53.2:46.8 | 47.6:52.4 | 53.2:46.8 | 53.2:46.8 | 53.2:46.8 | 42.9:57.1 |
| | Water:ethanol | 21.7:78.3 | 21.7:78.3 | 21.7:78.3 | 21.7:78.3 | 21.7:78.3 | 21.7:78.3 |
| (E) content (wt%) | | 30.0 | 21.8 | 30.0 | 30.0 | 30.0 | 30.0 |
| (E1+E2)/(A+B+C+E1+E2)*100 | | | | | | | |
| Test results | Yield of coated fertilizer (%) | 94 | 95 | 94 | 96 | 93 | 94 |
| | Initial release rate of ammoniacal nitrogen (%) | 40.5 | 48.5 | 45.5 | 48.5 | 32.0 | 48.5 |
| | Degree of disintegration | ⊚ | ⊚ | ⊚ | ⊚ | ⊚ | ○ |

| | | Example | | | Comparative Example | | |
|---|---|---|---|---|---|---|---|
| | | 7 | 8 | 9 | 1 | 2 | 3 |
| Type | (A) CE | HPMC-1 | HPMC-1 | HPMC-1 | HPMC-1 | HPMC-5 | HPMC-1 |
| | Hydrocarbon emulsion | AQUACER 539 | EMUSTAR -1155 | AQUACER 539 | Chemp W4005 | AQUACER 539 | AQUACER 539 |
| | Other compatibilizer | stearic acid | stearic acid | stearic acid | - | stearic acid | stearic acid |
| Weight ratio | (A)/(B) | 63.3/36.7 | 63.3/36.7 | 56.8/43.2 | 63.3/36.7 | 63.2/36.8 | 91.5/8.5 |
| | (A+B):(C) | 53.2:46.8 | 45.8:54.2 | 45.8:54.2 | 37.2:62.8 | 53.2:46.8 | 53.2:46.8 |
| | Water:ethanol | 21.7:78.3 | 21.7:78.3 | 21.7:78.3 | 21.7:78.3 | 21.7:78.3 | 21.7:78.3 |
| (E) content (wt%) | | 30.0 | 18.8 | 30.0 | 0.0 | 30.0 | 30.0 |
| (E1+E2)/(A+B+C+E1+E2)*100 | | | | | | | |
| Test results | Yield of coated fertilizer (%) | 95 | 96 | 95 | 94 | 93 | 95 |
| | Initial release rate of ammoniacal nitrogen (%) | 43.5 | 43.5 | 38.0 | 65.5 | 60.5 | 65.5 |
| | Degree of disintegration | ⊚ | ○ | ⊚ | Δ | ⊚ | ⊚ |

| | | | | | | | |
|---|---|---|---|---|---|---|---|
| Chemp W4005: CHEMIPEARL W4005 | | | | | | | |

## Claims

1. A fertilizer coating composition comprising
(A) a hydroxyalkyl alkylcellulose having a 2 wt% aqueous solution viscosity at 20°C of 10 to 8,000 mPa·s,
(B) tannin,
(C) a hydrocarbon compound having a melting point of 50 to 110°C as measured by a differential scanning calorimeter according to JIS K 0064, and
(D) at least one solvent selected from water and lower alcohols of 1 to 3 carbons,
the weight ratio of components (A)/(B) being from 50/50 to 83.3/16.7.

2. The fertilizer coating composition of claim 1 wherein the hydroxyalkyl alkylcellulose (A) is hydroxypropyl methylcellulose or hydroxyethyl methylcellulose.

3. The fertilizer coating composition of claim 1 or 2 wherein the tannin is at least one selected from the group consisting of hydrolyzable tannins and condensed tannins.

4. The fertilizer coating composition of any one of claims 1 to 3 wherein component (C) takes the form of an emulsion having particles of the hydrocarbon compound dispersed therein.

5. The fertilizer coating composition of any one of claims 1 to 4, further comprising (E) a compatibilizer.

6. The fertilizer coating composition of claim 5 wherein the compatibilizer is at least one member selected from aliphatic carboxylic acids, polyethylene glycol derivatives having at least one structure represented by RX(C₂H₄O)ₙ- wherein R is a C₁₀-C₂₄ straight or branched monovalent hydrocarbon group, X is oxygen or ester (COO), and n is an integer of 3 to 40, in the molecule and a polyalkylene glycol-terminating OH or -OH group as a functional group, and nonionic emulsifiers.

7. The fertilizer coating composition of claim 5 or 6 wherein the compatibilizer is at least one member selected from polyethylene glycol derivatives having the general formulae (1) and (2):
RX(C₂H₄O)ₙ-H (1)
(RCOO-(C₂H₄O)ₙ₁)ₜR¹((OC₂H₄)ₙ₂-OH)ᵤ (2)
wherein R, X and n are as defined above, R¹ is a residue obtained from a polyhydric alcohol having 2 to 5 hydroxy groups by removing the hydroxy groups, i.e., C₂-C₅ di- to pentavalent straight or branched hydrocarbon group, t and u each are an integer of 1 to 4, the sum of t and u is an integer of 2 to 5, n1 and n2 each are an integer of at least 0, n1×t+n2×u is an integer of 3 to 30.

8. The fertilizer coating composition of any one of claims 5 to 7 wherein the amount of component (E) is 8 to 40% by weight based on the total weight of components (A), (B), (C) and (E).

9. The fertilizer coating composition of any one of claims 1 to 7 wherein the weight ratio of the total weight of components (A) and (B) to component (C), i.e., (A+B)/C is from 30/70 to 70/30.

10. A coated fertilizer comprising a fertilizer and a coating layer covering the surface thereof, the coating layer being formed of the fertilizer coating composition of any one of claims 1 to 9.

11. The coated fertilizer of claim 10 which is in the form of particles or pellets.

12. A method for preparing a coated fertilizer comprising the steps of coating the fertilizer coating composition of any one of claims 1 to 9 to a fertilizer and drying the coating to remove the solvent.
